# EUROPEAN PATENT APPLICATION

(11) **EP 1 298 820 A2**
(43) Date of publication of application: **02.04.2003**
(21) Application number: 02256728.3
(22) Date of filing: 26.09.2002
(51) Int. Cl.: H04B 10/17

(54) **Remote modules in optical communications links**

(30) Priority: 28.09.2001 US 966697
(71) Applicant: Nortel Networks Limited, St. Laurent, Quebec H4S 2A9 (CA)
(72) Inventor: Maroney, Andrew V., Epping, Essex CM16 4PX (GB); Robinson, Alan, Essex, Essex (GB)
(74) Representative: Tocher, Alastair James

(57) **Abstract**

Two terminals 2, 4 in towns A, B respectively are connected by an optical link 1. The link 1 comprises optical modules 14, 15 and spans 20, 22, 24 interconnecting the optical modules14, 15. The modules 14, 15 require the application of light of a first wavelength to operate. Light of a second wavelength is coupled into a span 20, 22 at or close to a terminal 2, 4 and is carried along the span 20, 22 to an optical module 14, 15. The light of the second wavelength is converted to the first wavelength during its carriage along the span 20, 22.

## Description

### FIELD OF THE INVENTION

The invention relates to an optical communications links, in particular to such links including modules which require light for their operation.

### BACKGROUND OF THE INVENTION

In typical optical communications networks, optical fibres carry modulated optical signals on links between terminals. The signals are commonly transmitted in wavelength division multiplexed fashion with a transmission band divided into a number of wavelengths which are combined into a multiplexed stream. Each terminal may comprise a transceiver unit capable of sending and receiving optical signals. The link may comprise a number of optical fibre spans interconnecting optical fibre modules between the terminals. For example, in a so-called stretched fibre link, which could be of the order of 300 km in length, typically between two towns in a country, the optical modules may include optical fibre amplifiers which require light for their operation; so-called pump light is light which is pumped by coupling into the amplifier and which leads to the amplification of the input optical signals. Such amplifiers may be self-contained in the sense that a pump light source may be included at the module, which is powered by a dedicated module supply. However, the invention is especially concerned with what are termed remote modules which do not have a dedicated power source but are operated using pump light launched from or close to one of the terminals. For instance, a 300km stretched fibre span link may have two remote modules each located 100 km from a respective one of the terminals, and pump light launched at the nearest terminal has to be carried to the corresponding remote module.

An erbium doped fibre amplifier (EDFA) is one example of an optical fibre amplifier which may be included in a remote optical module. EDFAs require pump light of wavelength of about 980nm or 1480nm .

One way of carrying pump light to a remotely located EDFA is to use an optical fibre span, separate from but running parallel to the optical signal fibre span, between the terminal and the remote optical module. However, this necessitates at least one additional dedicated optical fibre span in the link.

An alternative way of carrying pump light to a remotely located EDFA is to couple the pump light into the link at or close to a terminal. The optical signal fibre span between the terminal and the module carries the pump light to the EDFA. However, the pump light may be subjected during its carriage along the span to the Raman effect. This may result in the distributed Raman amplification of the optical signal. Specifically in the case of EDFA pump light of 1480nm, the Raman gain may be relatively high and the slope of the Raman gain profile may be such that, in the case of certain bands of multiplexed optical signals, particularly of low power, the gain tilt, that is the gradient of the gain across a band of multiplexed wavelengths, may be undesirable.

### OBJECT OF THE INVENTION

An object of the invention is to carry light to a remote optical module with minimum undesirable effects.

### BRIEF DESCRIPTION OF THE INVENTION

According to a first aspect, the invention provides an optical communications link between two terminals, the link comprising optical modules and spans interconnecting the optical modules, wherein the modules require the application of light of a first wavelength to operate, wherein light of a second wavelength is coupled into a span at or close to a terminal and is carried along the span to an optical module, and wherein the light of the second wavelength is converted to the first wavelength during its carriage along the span.

The first wavelength may be 1480nm and the second wavelength may be 1390nm but other wavelength pairings are equally applicable.

Light of the first wavelength may also be coupled into the span at or close to the terminal to assist, or seed, the conversion.

The wavelength conversion effect within the span facilitates the utilisation of a wavelength, that is, the second wavelength, which may be preferable, in terms of the undesirable effects associated with carriage along a span to a remote optical module, to the first wavelength. In other words, if there are undesirable effects associated with the carriage of the first wavelength of light along the span, such as significant gain tilt, these can be avoided by coupling light of a second wavelength, which does not exhibit the undesirable effects. Moreover, in situations where high power light is required at the remote optical module, undesirable effects will be magnified by increase on launch of the power of light susceptible to undesirable effects. Whereas, the power of the light of the second wavelength can be increased without such effects.

The optical module may include an optical amplifier to which light is applied in order to amplify an optical signal also carried along the span.

The conversion during the carriage along the span may be by means of Raman scattering. A proportion of the converted light may contribute to Raman gain and the remaining light is applied to modules.

The first wavelength of light may be different from the second wavelength of light by one Stokes shift.

The link may comprise coupling means at or close to the terminal coupling light of the second wavelength into the span. The link may also comprise a source of the light of the second wavelength, which may also be at or close to a terminal. The link may additionally comprise a source of light of the first wavelength. The coupling means may also couple light of the first wavelength into the span.

The link may be an optical fibre link and the spans may be optical fibre spans. The optical module may include an optical fibre amplifier, such as an EDFA.

According to a second aspect, the invention provides a span for an optical communications link, the span having first and second ends, the first end for connection to an optical module requiring light of a first wavelength to operate, wherein light of a second wavelength is launched into the second end of the span, which light is converted to the first wavelength on its carriage along the span.

According to a third aspect, the invention provides an optical arrangement for inclusion in a span between a terminal and an optical module which requires light of a first wavelength to operate, the arrangement comprising a source outputting light of a second wavelength and a coupler for coupling light output by the source into the span.

According to a fourth aspect, the invention provides an optical communications link between two terminals comprising optical modules including an EDFA and optical fibre spans interconnecting the optical modules, wherein the EDFA requires the application of light of a first wavelength to operate, wherein light of a second wavelength is coupled into a span at or close to a terminal and is carried along the span to the EDFA, and wherein the light of the second wavelength is converted to the first wavelength during its carriage along the span.

According to a fifth aspect the invention provides an optical communications network comprising a link according to a first aspect of the invention, a span according to a second aspect of the invention or a an optical arrangement according to a third aspect of the invention.

The invention is also directed to a method by which the described apparatus operates and including method steps for carrying out every function of the apparatus.

According to a sixth aspect, the invention provides a method of driving an optical module requiring the application of light of a first wavelength for operation, which optical module is in an optical communications link between two terminals and connected to one of the terminals by a span, the method comprising launching into the span light of a second wavelength wherein the light is converted to the first wavelength during its carriage along the span.

A proportion of the converted light may be consumed by a process occurring along the link, such as amplification, and the remaining light is applied to modules.

According to a seventh aspect, the invention provides a method of driving an optical module including an EDFA requiring the application of light of a first wavelength for operation, which optical module is in an optical communications link between two terminals and connected to one of the terminals by an optical fibre span, the method comprising launching into the span light of a second wavelength wherein the light is converted to the first wavelength during its carriage along the span.

The preferred features may be combined as appropriate, as would be apparent to a skilled person, and may be combined with any of the aspects of the invention.

### DESCRIPTION OF THE DRAWINGS

In order to show how the invention may be carried into effect, embodiments of the invention are now described below by way of example only and with reference to the accompanying figures in which:

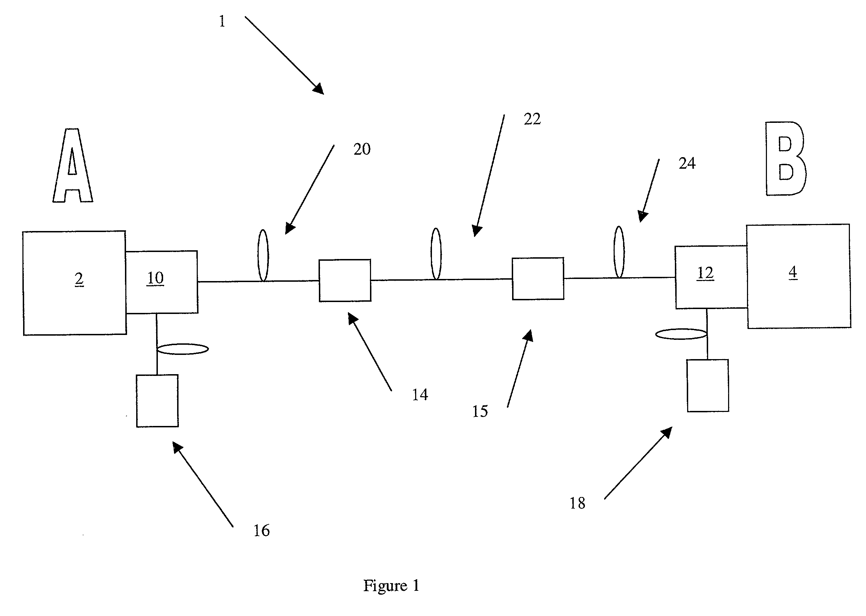

Figure 1 is a block schematic diagram of an optical communications link according to the invention.

### DESCRIPTION OF THE INVENTION

With reference to figure 1, an optical communications link 1 between two terminals 2, 4, the first 2 in a town A and the second 4 in a town B has. Each terminal 2, 4 has a transceiver unit (not shown) for transmitting and receiving dense wavelength division multiplexed (DWDM) modulated optical communications signals. For the purposes of illustration, the invention will be described with reference to a unidirectional transmission between town A and town B although, in reality, the link would be bidirectional.

Optical signals are launched from the first terminal 2 along the link 1 sequentially via a first optical module 14 and a second optical module 15 to the terminal 4. Included also at the terminals 2, 4 are couplers 10, 12 respectively. Optical fibre span 20 has its first end connected to the coupler 10 at the first terminal 2 and its second end connected to the first optical module 14. Optical fibre span 22 connects the first optical module 14 to the second optical module 15. Optical fibre span 24 connects the second optical module 15 and the coupler 12 at the second terminal 4.

In the example illustrated, the towns A and B are 300 kilometres apart with the first optical module 14 situated 100 km from the first terminal 14 and the second optical module 15 situated 100 km from the second terminal 4. The coupler 10 at the first terminal 2 is used to couple light from a first optical source 16, at the first terminal 2, into the link 1 in the forward direction (with uni-directional transmission). The coupler 12 is used to couple light from a second optical source 18, at the second terminal 4, into the link 1 in the reverse direction.

Each of the optical modules 14, 15 includes an EDFA (not shown) for amplifying the optical modulated signals carried from the first terminal 2 to the second terminal 4 so as to compensate for losses. With each of the optical modules 14, 15 buried underground during installation, subsequent access is not possible. Moreover, each optical module does not have a dedicated power supply. The so-called pump light, that is the light required to be applied to the EDFA in order for it to achieve its amplifying effect, is supplied from the optical sources 16, 18 respectively. The light required by the first optical module 14 for its operation is carried along the fibre span 20 from the coupler 10; the light required by the second optical module 15 is carried along the fibre span 24 from the coupler 12.

Each of the EDFAs at the optical modules 14, 15 requires the application of light at 1480nm to operate. Each of the optical sources 16, 18 comprises light sources (not shown) outputting light of wavelength 1390nm which is coupled into the optical fibre spans 20, 24 respectively. For the material of the optical fibres in the spans 20, 24, 1390nm is one Stoke's shift away from 1480nm. In other words, in terms of the Raman effect, light of 1390nm will, as a result of Raman scattering, be converted in one shift from 1390nm to 1480nm. The light sources in each of the optical sources 16, 18 also output light of wavelength 1480nm. This is also coupled into the optical fibre spans 20, 24 to seed Raman scattering. Consequently, during its carriage along the fibre spans 20, 24 the light will be subjected to the Raman effect and will be converted from 1390nm to 1480nm. A proportion of the converted light contributes to Raman gain within the fibre spans 20, 24, resulting in the amplification of the modulated optical input signals. However, because the Raman gain profile at 1390nm is relatively flat, the optical signals will not be subjected to excessive gain tilt. A proportion of the converted light passes to the erbium doped fibre amplifier within the optical modules 14, 15 where it serves as pump light. Thus, each of the EDFAs is driven as an amplifier and amplifies the input modulated signals.

Any range or device value given herein may be extended or altered without losing the effect sought, as will be apparent to the skilled person for an understanding of the teachings herein.

## Claims

1. An optical communications link 1 between two terminals, the link comprising optical modules 14, 15 and spans 20, 22, 24 interconnecting the optical modules, **characterised in that** the modules require the application of light of a first wavelength to operate, wherein light of a second wavelength is coupled into a span 20, 22 at or close to a terminal 2,4 and is carried along the span 20, 22 to an optical module 14, 15, and wherein the light of the second wavelength is converted to the first wavelength during its carriage along the span 20, 22.

2. An optical communications link according to claim 1 wherein light of the first wavelength is coupled into the span at or close to the terminal.

3. An optical communications link according to claim 1 wherein the optical module includes an optical amplifier to which light is applied in order to amplify an optical signal also carried along the span.

4. An optical communications link according to claim 1 wherein the conversion during the carriage along the span is by means of Raman scattering.

5. An optical communications link according to claim 4 wherein a proportion of the converted light contributes to Raman gain and the remaining light is applied to modules.

6. An optical communications link according to claim 4 or claim 5 wherein the first wavelength of light may be different from the second wavelength of light by one Stokes shift.

7. An optical communications link according to claim 1 comprising a source of the light of the second wavelength.

8. An optical communications link according to claim 1 comprising a source of light of the first wavelength.

9. An optical communications link according to claim 1 comprising coupling means at or close to the terminal coupling light of the second wavelength into the span.

10. An optical communications link according to claim 9 wherein the coupling means also couples light of the first wavelength into the span.

11. An optical communications link according to claim 1 which is an optical fibre link and the spans are optical fibre spans.

12. An optical communications link according to claim 1 wherein the optical module includes an optical fibre amplifier.

13. An optical communications link according to any one of claims 1-12 wherein at least one optical module comprises an EDFA.

14. A span 20 for an optical communications link 1, the span having first and second ends, the first end for connection to an optical module 14 requiring light of a first wavelength to operate, **characterised in that** light of a second wavelength is launched 10 into the second end of the span, which light is converted to the first wavelength on its carriage along the span.

15. An optical arrangement for inclusion in a span 20 between a terminal 2 and an optical module 14 which requires light of a first wavelength to operate, **characterised in that** the arrangement comprises a source 16 outputting light of a second wavelength and a coupler 10 for coupling light output by the source into the span.

16. An optical communications network comprising a link according to any one of claims 1-13 a span according to claim 14 or an optical arrangement according to claim 15.

17. A method of driving an optical module 14 requiring the application of light of a first wavelength for operation, which optical module is in an optical communications link 1 between two terminals 2,4 and connected to one of the terminals by a span 20, **characterised in that** the method comprises launching 10 into the span light of a second wavelength wherein the light is converted to the first wavelength during its carriage along the span.

18. A method according to claim 17 wherein a proportion of the converted light is consumed by an effect occurring along the link and the remaining light is applied to modules.

19. A method of driving an optical module according to claim 17 wherein the optical module comprises an Erbium Doped Fibre Amplifier.
